# FASCICULE DE BREVET EUROPEEN

(11) **EP 0 955 256 B1**
(45) Date de publication et mention de la délivrance du brevet: **14.08.2002**
(21) Numéro de dépôt: 99401104.7
(22) Date de dépôt: 05.05.1999
(51) Int. Cl.: B65G 65/46

(54) **Ensemble extracteur de matières solides à vis sans fin pourvu de moyens d'accès améliorés**
Schneckenaustragsvorrichtung für Schüttgut mit verbesserten Zugangsmitteln
Screw discharging device for bulk material having an enhanced access

(30) Priorité: 07.05.1998 FR 9805786
(43) Date de publication de la demande: 10.11.1999
(73) Titulaire: Starvrac S.A., 62690 Hermaville (FR)
(72) Inventeur: Ramboz, Maurice, 39100 Dole (FR)
(74) Mandataire: Wagret, Frédéric

(56) Documents cités:
- FR-A- 2 669 012
- FR-A- 2 686 328

## Description

La présente invention concerne un ensemble extracteur pour matières solides pulvérulentes ou en grains (stockées sur une aire ou dans un silo selon la préambule de la revendication 1.

De tels ensembles comprennent deux vis sans fin colinéaires, disposées sensiblement selon un diamètre et destinées à évacuer la matière vers un orifice d'évacuation central, prévu sur l'aire (ou au fond du silo) et au-dessus duquel est fixé un bâti en forme générale de U renversé à 90°, et entre les branches horizontales duquel est disposé un carter sur lequel est fixée l'extrémité proximale de chaque vis, l'ensemble carter/vis étant susceptible d'être entraîné en rotation autour de l'axe vertical central de l'aire (ou du silo) par des premiers moyens d'entraînement, les vis étant par ailleurs entraînées en rotation autour de leur propre axe par des seconds moyens d'entraînement.

La présente invention s'applique plus particulièrement aux dispositifs appartenant à la famille décrite par le brevet français FR-A-76 05688.

Les ensembles extracteur de type connu donnent généralement satisfaction, mais ils n'en présentent pas moins des inconvénients et sont donc susceptibles d'améliorations.

On sait que ces ensembles extracteur comportent des mécanismes d'entraînement et de support qui doivent être dimensionnés de façon à supporter les grandes contraintes auxquelles ils sont soumis, tout en assurant, de manière fiable, l'entraînement en rotation des vis sur elles-mêmes d'une part, et des vis autour d'un axe central vertical d'autre part.

Ces mécanismes, quelque soit leur degré de fiabilité, sont soumis à des opérations de maintenance nécessaires, sans parler de réparations résultant de l'usure normale.

Or, dans les ensembles d'extraction de type connu tels que décrits ci-dessus, l'accès aux mécanismes et moyens d'entraînement est relativement difficile.

En outre, on accède de façon connue par la hotte prévue à l'aplomb et sous l'orifice d'évacuation, ce qui a pour conséquence directe d'obliger à arrêter le fonctionnement de l'ensemble extracteur pour permettre une réparation ou une visite de maintenance. Cet arrêt est préjudiciable aux contraintes économiques d'exploitation.

L'arrêt d'exploitation est également obligatoires dans le cas des dispositifs décrit par les documents FR-A-2 669 012 et FR-A-2 686 328 qui présentent des ouvertures latérales pratiquées dans la paroi du silo et destinées à extraire la ou les vis sans fin. Cependant, dans ces documents connus, le bâti n'est pas en forme générale de U renversé à 90°, ce qui n'engendre pas les mêmes contraintes d'exploitation.

Par ailleurs, les réparations et opérations de maintenance sont réalisées en accédant à l'intérieur du bâti, alors que le silo peut être encore plein. Il en résulte un risque important pour les opérateurs, du fait d'éboulement ou d'écoulement gravitaire incontrôlé, quand bien même les vis sont à l'arrêt. En règle générale, le silo doit donc être entièrement ou quasiment vidé pour éventuellement accédé à l'intérieur du bâti.

La présente invention a pour but de remédier à ces inconvénients en proposant un ensemble extracteur qui présente des moyens permettant d'accéder facilement et sans risque aux moyens d'entraînement, aux vis sans fin et aux mécanismes disposés dans le bâti, y compris durant le fonctionnement de l'ensemble extracteur.

A cette fin, selon l'invention, l'ensemble extracteur de matières solides (pulvérulentes ou en grains) stockées sur une aire (ou dans un silo), du type comprenant deux vis sans fin colinéaires, disposées sensiblement selon un diamètre et destinées à évacuer la matière vers un orifice d'évacuation central, prévu sur l'aire (ou au fond du silo) et au fond duquel est fixé un bâti en forme générale de U renversé à 90°, et entre les branches horizontales duquel est disposé un carter sur lequel est fixée l'extrémité de chaque vis, l'ensemble carter/vis étant susceptible d'être entraîné en rotation autour de l'axe vertical central de l'aire (ou du silo) par des premiers moyens d'entraînement, les vis étant par ailleurs entraînées en rotation autour de leur propre axe par des seconds moyens d'entraînement, est caractérisé en ce que le bâti est creux et comporte des moyens permettant à au moins un intervenant d'accéder depuis l'extérieur à l'intérieur du bâti, et/ou permettant le déplacement dudit intervenant, et/ou permettant le déplacement des moyens d'entraînement et/ou tout autre dispositif inclus dans ledit bâti.
La face inférieure de la branche inférieure du U renversé comprend une première ouverture, du côté de la partie verticale du U renversé.
Egalement, la face inférieure de la branche inférieure comporte une seconde ouverture. Avantageusement, l'ensemble comporte de plus des moyens de manutention et de déplacement de tout ou partie des premiers et seconds moyens d'entraînement, respectivement.
De préférence, les moyens de manutention et de déplacement comportent au moins un rail, un chariot et un système de palans.

Egalement, le carter avantageusement comprend une trappe d'accès latérale.

Avantageusement, l'extrémité distale de la branche supérieure du U est prolongée selon un plan vertical, par une jupe obturant partiellement l'espace délimité par les deux branches horizontales dudit U.

L'invention sera bien comprise à la lumière de la description qui suit se rapportant à un exemple illustratif et non limitatif, en référence aux dessins annexés dans lesquels :
- La figure 1 est une vue de dessus de l'ensemble extracteur disposé dans un silo;
- La figure 2 est une vue de côté selon l'axe II-II de la figure 1 lorsque les vis ont tourné de 90 degrés dans le sens de la flèche f par rapport à la représentation de la figure 1;
- La figure 3 est une vue de côté selon l'axe III-III de la figure 1 lorsque les vis ont tourné de 90 degrés dans le sens de la flèche f par rapport à la représentation de la figure 1;
- La figure 4 est une vue en coupe transversale dans un plan vertical du bâti montrant les moyens d'entraînement;
- La figure 5 montre le déplacement (après démontage) des moyens d'entraînement des vis en rotation sur elles-mêmes;
- La figure 6 montre le déplacement du carter à l'intérieur du bâti;
- La figure 7 montre le démontage des moyens de refroidissement; et
- La figure 8 montre le déplacement des moyens d'entraînement du carter.

L'invention sera décrite ci-après en référence à un ensemble extracteur disposé dans un silo, étant entendu que l'invention peut être également appliquée à une aire de stockage, disposée à l'air libre.

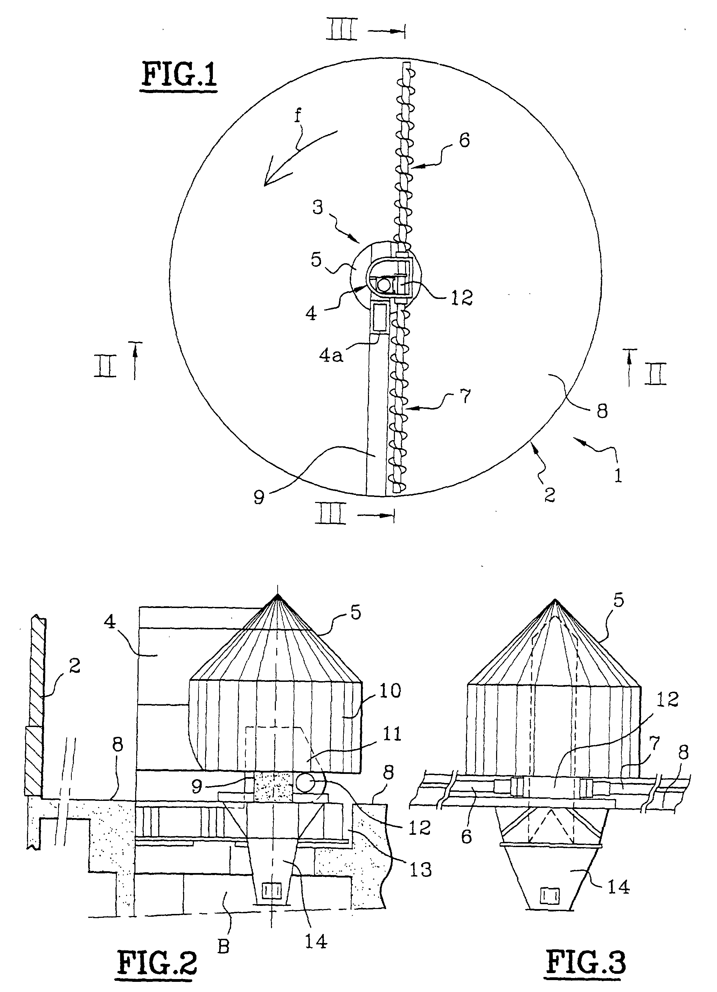

En référence à la figure 1, on a représenté en coupe selon un plan horizontal, un silo référencé 1, comportant une paroi cylindrique 2. Au centre du silo est disposé l'ensemble extracteur référencé 3 selon l'invention, et comportant un bâti 4 surmonté d'un cône de protection 5. Deux vis sans fin colinéaires référencées 6 et 7, sont disposées sensiblement selon un diamètre du silo, et à proximité et parallèlement au fond du silo.

Les deux vis sont animées d'un mouvement de rotation, d'une part autour de leur propre axe, en sens inverse, et d'autre part autour de l'axe central vertical du silo, selon un mouvement de rotation explicité ci-après.

Un orifice d'évacuation (non représenté car étant situé juste en dessous du bâti 4 et du cône de protection 5) est prévu au centre du silo.

Les mouvements conjugués de rotation des vis, d'une part sur elles-mêmes, et d'autre part autour de l'axe vertical du silo, entraînent l'acheminement de la matière solide disposée dans le silo, vers l'orifice d'évacuation.

Les matières ou matériaux solides susceptibles d'être stockés dans le silo et acheminés par l'ensemble extracteur de l'invention, vers l'orifice d'évacuation, sont du type pulvérulentes ou en grains, ou tous types de matériaux similaires, susceptibles d'être stockés en silo, ou sur une aire à l'extérieur, et susceptibles d'être acheminés et déplacés par vis sans fin.

Les vis 6 et 7 colinéaires sont disposées selon une droite décalée légèrement par rapport à l'axe central du silo. Il en résulte que pendant leur mouvement de rotation autour de l'axe central du silo sensiblement, les vis laissent une zone « morte » qui n'est pas balayée par les vis. Cette zone est occupée par un élément 9 radial, en relief par rapport au fond 8 du silo, de longueur équivalent à l'espace disponible entre l'extrémité 4a du bâti et la paroi 2 cylindrique du silo, la largeur de l'élément en relief étant sensiblement équivalente à la largeur du bâti dans le sens circonférentiel, au niveau de la face 4a d'extrémité dudit bâti.

L'élément en relief 9 est réalisé par exemple en béton ou en panneaux métalliques soudés, et présente de préférence, pour des raisons de simplification de réalisation, une section prismatique dont la face supérieure est inclinée ou présente deux faces inclinées pour éviter la stagnation de la matière sur ledit élément en relief 9.

D'autres éléments techniques de fonctionnement et d'installation (connus en eux-mêmes) sont prévus, non représentés et non décrits, et l'homme de l'art pourra trouver dans le brevet numéro FR-A-76 05688 des informations concernant ces éléments connus.

En référence à la figure 2, on a représenté une vue en coupe et de côté, partielle, de l'ensemble extracteur de l'invention vu selon le segment II-II de la figure 1, les vis ayant tourné de 90 degrés dans le sens de la flèche f par rapport à la représentation de la figure 1.

On retrouve la paroi 2 et le fond 8 du silo 1, l'élément radial 9 en relief, le bâti 4, le cône de protection 5 et la jupe 10.

A l'intérieur du bâti 4 est disposé un carter 11 sur lequel sont fixées les vis 6 et 7 (qui ne sont pas visibles sur la figure car étant perpendiculaires au plan de celle-ci), seul l'axe 12 commun aux deux vis est représenté.

L'orifice d'évacuation prévu sur le fond 8 du silo, porte la référence 13 et à la base du bâti 4 est prévue une hotte d'évacuation 14 débouchant dans une chambre d'évacuation et d'accès B prévue à l'aplomb de l'ouverture 13.

Sur la figure 3 représentant une vue de côté selon le segment III-III de la figure 1 après une rotation des vis de 90 degrés dans le sens de la flèche f par rapport à la représentation de la figure 1, on retrouve l'ensemble extracteur et les éléments constitutifs portant les mêmes références que sur les figures 1 et 2.

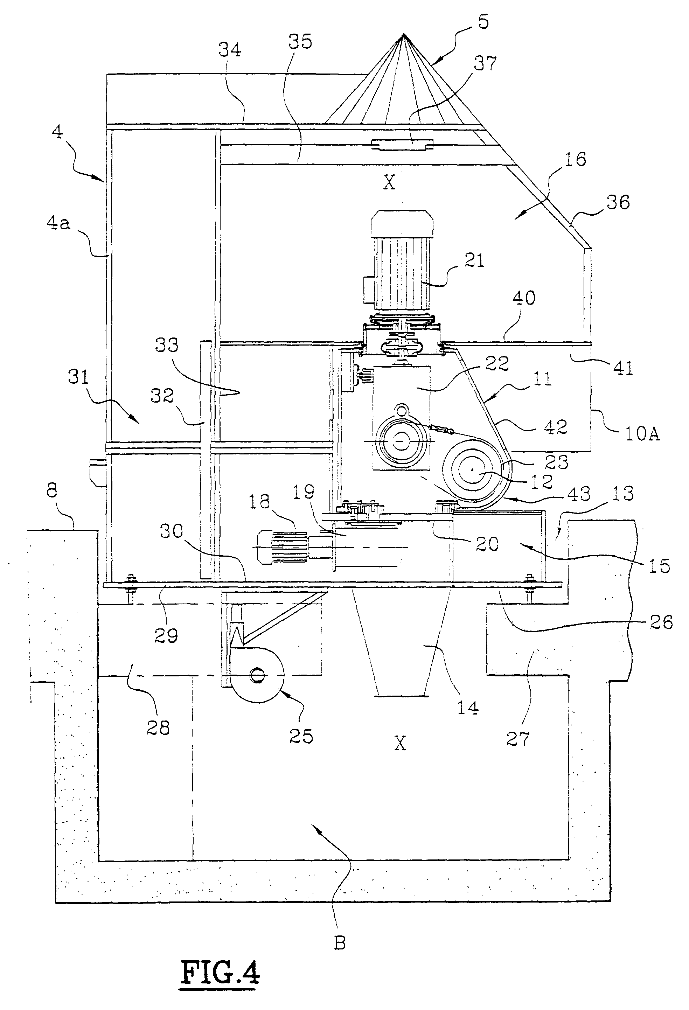

Il est fait référence maintenant à la figure 4 montrant une vue en coupe selon un plan vertical, à une échelle agrandie, de l'ensemble extracteur (correspondant sensiblement à la vue de la figure 2).

Le bâti 4 présente une forme générale de U renversé à 90°. Pour des raisons de commodité et améliorer la compréhension du dessin, la paroi extérieure du bâti a été représentée en traits gras. Le bâti 4 est creux et réalisé en panneaux métalliques assemblés ou soudés.

Le U formant le bâti 4 comporte ainsi deux branches horizontales, à savoir une branche inférieure 15 et une branche supérieure 16.

La jupe 10 (figures 2 et 3) est avantageusement prolongée (figure 4) vers le bas par un prolongement 10A vertical, au niveau de la branche supérieure 16, de manière à obturer partiellement l'espace situé entre lesdites branches 15 et 16.

Dans l'espace délimité par et situé entre les deux branches 15 et 16, est disposé le carter 11 apte à être entraîné en rotation autour de l'axe X-X vertical, par des moyens d'entraînement, comprenant un moteur 18 et un bloc motoréducteur 19, disposé sensiblement à l'intérieur de la branche inférieure 15 creuse, et à proximité de la face supérieure 20 de cette dernière. Le bloc motoréducteur 19 est en relation par l'intermédiaire d'engrenages et pignons, avec une couronne fixée sur la base du carter, la couronne étant dentelée sur sa périphérie intérieure. La couronne repose sur la face supérieure 20 de la branche inférieure 15 du bâti 4, par l'intermédiaire de roulements à aiguilles ou à billes. Par ailleurs, le carter 11 est maintenu dans sa partie supérieure par des moyens de guidage autorisant sa rotation par rapport au bâti 4, autour de l'axe X-X. Ces moyens faisant l'objet du présent paragraphe ne sont pas décrits plus avant et font l'objet d'une demande de brevet déposée au nom du demandeur, ce même jour.

A l'intérieur du carter 11 sont prévus des moyens d'entraînement des vis (en rotation autour de leur propre axe) par l'intermédiaire d'un moteur 21, fixe par rapport au bâti 4. Le moteur 21 est plus particulièrement disposé à l'intérieur de la branche supérieure 16 du bâti 4. L'arbre du moteur transmet le mouvement de rotation aux vis autour de leur propre axe, par l'intermédiaire d'un motoréducteur 22 et d'une poulie 23 fixée sur l'arbre 12 commun aux deux vis. Le motoréducteur 22 et la poulie 23 sont disposés à l'intérieur du carter 11 et fixés sur celui-ci par des moyens 24 connus en eux-mêmes.

La liaison entre le moteur fixe 21 et le carter 11 tournant n'est pas décrite plus avant et fait l'objet d'une demande de brevet déposée ce même jour au nom du demandeur.

Il est prévu également des moyens de circulation d'air 25, pour évacuation de poussières et refroidissement, et disposés à proximité et sous la face inférieure 26 de la branche inférieure 15 du bâti en U. Ces moyens font l'objet d'une demande de brevet déposée ce même jour, au nom de demandeur.

Le bâti 4 repose, par l'intermédiaire de moyens de fixation connus, sur des plots 27 et 28, faisant saillie par rapport à la paroi intérieure verticale de la chambre B d'évacuation et d'accès.

Les opérations de réparation ou de maintenance sont susceptibles d'être effectuées par un ou plusieurs intervenants qui accèdent au bâti 4 par la chambre B, elle-même reliée à un passage débouchant vers l'extérieur du silo (non représenté).

L'ensemble extracteur de l'invention présente les caractéristiques suivantes permettant de faciliter l'accès aux pièces à réparer ou maintenir, et leur démontage et acheminement dans le bâti 4 et leur évacuation.

En référence toujours à la figure 4, la face inférieure 26 de la branche inférieure 15 comporte une première ouverture distale 29 prévue du côté de la base du U renversé, c'est-à-dire du côté opposé aux extrémités distales des branches 15 et 16 dudit U.

Une seconde ouverture proximale 30 est prévue sur ladite face inférieure 26, décalée vers l'axe X-X par rapport à la première ouverture distale 29.

Un intervenant, après avoir pénétré dans la chambre d'évacuation B, est susceptible de pénétrer dans un premier espace intérieur 31 allongé vers le haut, et de longueur (en hauteur) égale à la hauteur du U renversé du côté de sa base verticale 4a.

L'intervenant est à même ensuite, après avoir passé au-travers de l'ouverture distale 29, d'accéder à l'intérieur de l'espace 31, puis par une échelle 32 fixée sur une paroi interne verticale 33 du bâti, accéder à l'intérieur de la branche supérieure 16 creuse. Il peut alors procéder aux opérations nécessaires, par exemple sur le moteur 21.

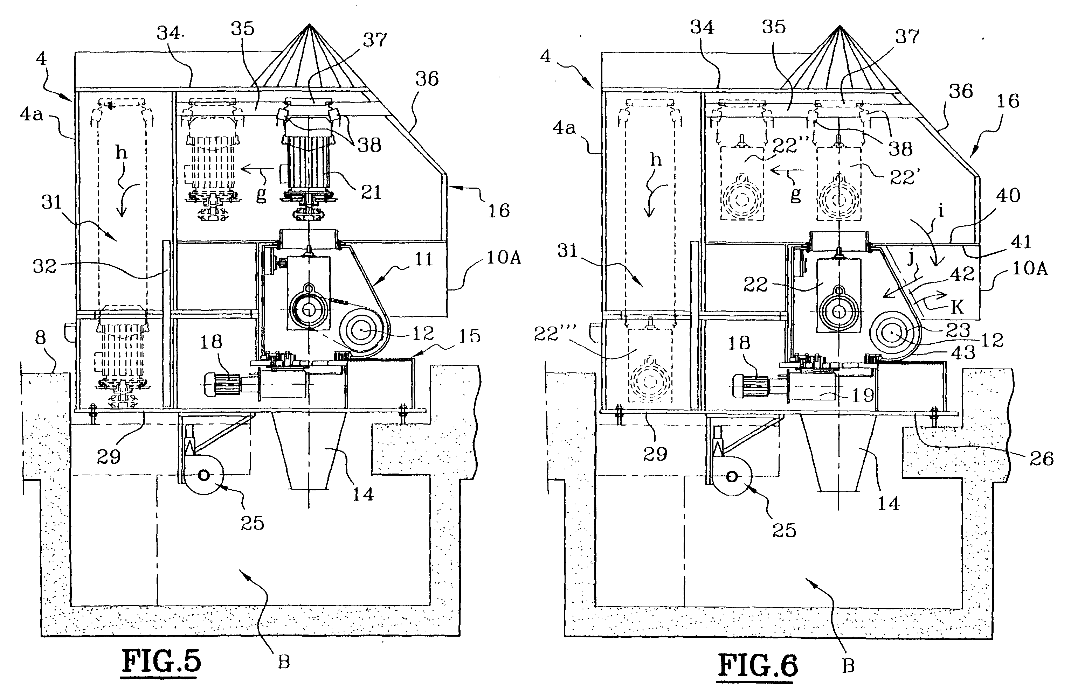

En référence maintenant aux figures 5 à 8, on décrit ci-après les différents stades de manutention et déplacement des moyens d'entraînement disposés à l'intérieur du bâti.

Les figures 5 à 8 sont l'équivalent de la figure 4 à échelle plus petite, sur le plan de la structure du bâti 4 et des moyens et mécanismes que ce dernier contient.

Sur la figure 5, on montre le déplacement et l'acheminement du moteur 21, destiné à l'entraînement en rotation des vis autour de leur propre axe.

On a décrit ci-dessus le moyen d'accès du ou des intervenants jusqu'au moteur 21.

La face supérieure horizontale 34 de la branche supérieure 16 du bâti 4 comporte à l'intérieur du bâti, un rail 35 horizontal, et dont les extrémités butent contre les parois d'extrémité, respectivement 36 de la branche supérieure 16 et 4a du bâti 4.

Le rail 35 est associé à un chariot 37 déplaçable sur ledit rail par l'intermédiaire de roues ou galets, de manière connue, ledit chariot étant associé à des crochets et un système de palans permettant à l'aide de chaînes ou équivalents, le levage, après démontage, du moteur 21 dans le sens vertical ascendant. On obtient la position représentée sur la figure 5 en traits pleins, pour le moteur 21, le chariot 37 et le système de palans 38.

Par translation horizontale représentée par la flèche « g », parallèlement au rail 35, le chariot 37 se déplace sur ledit rail 35.

Le déplacement du chariot 37 avec sa charge (moteur 21) est poursuivi jusqu'à ce que le chariot pénètre dans l'espace vertical 31, puis le système de palans est mis en marche pour permettre la descente, le chariot 37 étant immobile, du moteur 21 dans ledit espace 31, et faire passer ledit moteur 21 au-travers de l'ouverture 29 prévue dans la face inférieure 26 du bâti, pour permettre l'évacuation du moteur par la chambre B vers l'extérieur. Deux phases intermédiaires de déplacement du moteur 21 sont représentées en pointillés sur la figure 5.

La figure 6 montre une phase ultérieure destinés à l'acheminement et au déplacement du bloc motoréducteur 22 disposé à l'intérieur du carter 11.

On a représenté en traits pleins la position d'origine du motoréducteur 22. Après démontage de celui-ci, étant entendu que le moteur 21 a été démonté et enlevé, on procède de manière similaire en ce sens que les moyens d'accrochage sont disposés sur le motoréducteur 22, associé au palan 38. Les palans sont mis en marche pour remonter vers la paroi supérieure 34 du bâti 4, le motoréducteur 22. Le chariot 37 est alors déplacé en translation (flèche « g » et position 22' du motoréducteur). Une fois le chariot 37 arrivé en bout de course, c'est-à-dire dans l'espace 31 vertical, le chariot 37 est immobilisé; les palans sont alors mis en marche pour descendre le bloc motoréducteur 22" dans ledit espace 31, et faire passer celui-ci au travers de l'ouverture distale 29.

Le motoréducteur 22 est alors acheminé, via la chambre B, vers l'extérieur du silo.

Selon l'invention également, l'accès à l'intérieur du carter 11 peut être réalisé par l'intermédiaire des moyens suivants.

Une ouverture 40 est prévue sur la face inférieure 41 de la branche supérieure 16 du bâti 4, et débouchant sur l'espace intérieur délimité par les deux branches respectivement inférieure 15 et supérieure 16.

L'intervenant pénétre dans l'espace vertical 31, puis dans l'espace intérieur de la branche supérieure creuse 16, passe au travers de l'ouverture 40 pour accéder à l'espace défini entre les deux dites branches 15 et 16, pour accéder enfin au carter.

Afin de pénétrer ou accéder à l'intérieur de celui-ci, le carter 11 comporte une trappe frontale 42 dans sa partie sensiblement axiale verticale, et notamment la partie renflée 43 contenant la poulie 23 et l'axe 12 commun aux deux vis.

Ainsi, l'intervenant est à même, en suivant le cheminement décrit ci-dessus et représenté par les flèches « i » et « j », de pénétrer à l'intérieur du carter pour effectuer les opérations nécessaires de démontage, maintenance ou réparation ou autres. La flèche « k » symbolise la sortie de l'intervenant. La trappe 42 est constituée d'un panneau articulé sur la face correspondante du carter 11.

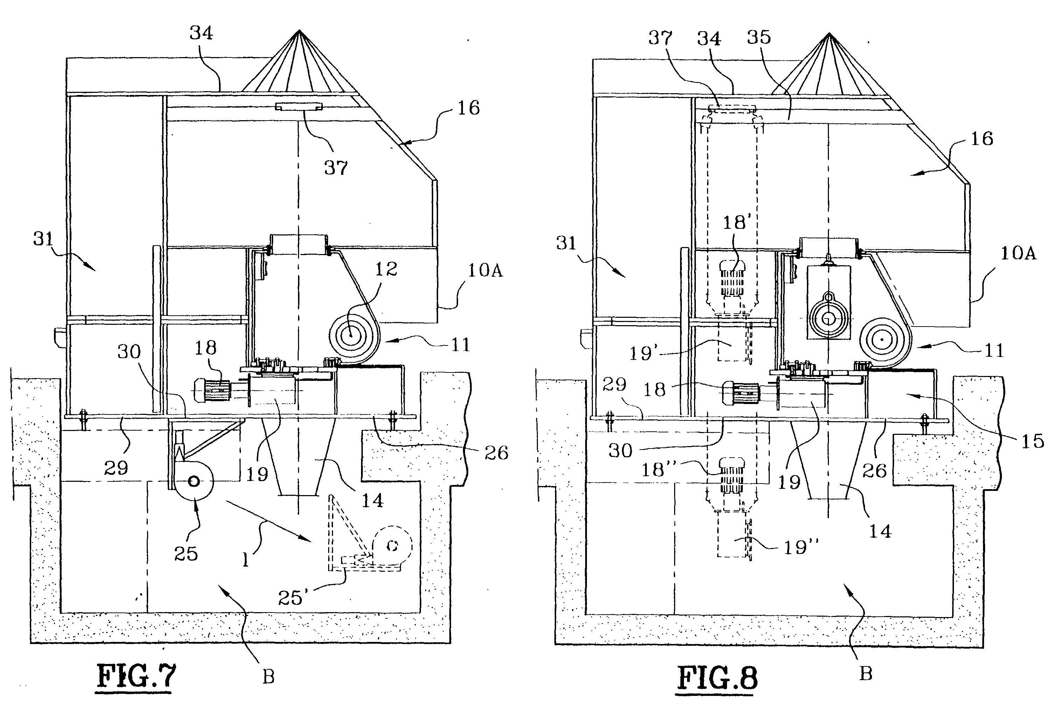

La figure 7 montre le démontage et l'acheminement des moyens de circulation d'air 25 après leur démontage, directement depuis l'intérieur de la chambre B et déplacés (flèche « I ») vers l'extérieur du silo, les moyens étant représentés en pointillés dans une position démontée 25' et en cours d'acheminement.

Les moyens 25 de ventilation et d'aération sont disposés au droit de l'ouverture proximale 30 prévue sur la face inférieure 26, et permettent donc d'évacuer par cette même ouverture les seconds moyens d'entraînement (moteur 18 et motoréducteur 19), après démontage et acheminement, tel que décrit ci-après en référence à la figure 8.

Une fois que le moteur 18 et le bloc réducteur 19 sont démontés, on utilise des moyens d'accrochage par l'intermédiaire des palans 38, associés au chariot 37, pour lever l'ensemble moteur et motoréducteur, jusqu'à la position 18'/19' montrée sur la figure 8 en pointillés. Ensuite, on laisse le rail 37 fixe, puis on agit sur le palan de manière à descendre l'ensemble moteur et motoréducteur 18/19 au travers de l'ouverture 30, pour accéder ainsi à la chambre B d'évacuation, dans une position 18"/19" montrée également en pointillés, pour évacuation vers l'extérieur ou réparation in situ.

On note que le prolongement 10A (figures 4 à 8) de la jupe 10 vers le bas permet de protéger l'espace situé entre les branches 15 et 16, de la matière stockée et facilite, voire rend possible, les interventions décrites ci-dessus, notamment pour accéder au carter 11 par la trappe 42.

## Revendications

1. Ensemble extracteur de matières solides pulvérulentes ou en grains stockées sur une aire ou dans un silo (1), du type comprenant deux vis sans fin (6, 7) colinéaires, disposées selon un diamètre de l'aire ou du silo et destinées à évacuer la matière vers un orifice d'évacuation central (13), prévu sur l'aire ou au fond du silo (1) et au fond duquel est fixé un bâti (4) en forme de U renversé à 90°, et entre les branches horizontales inférieure (15) et supérieure (16) duquel est disposé un carter (11) sur lequel est fixée l'extrémité de chaque vis (6, 7), l'ensemble carter (11)/vis (6, 7) étant susceptible d'être entraîné en rotation autour de l'axe vertical (X) central de l'aire ou du silo (1) par des premiers moyens d'entraînement, les vis (6, 7) étant par ailleurs entraînées en rotation autour de leur propre axe (12) par des seconds moyens d'entraînement, ledit bâti (4) étant creux et comportant au moins une première ouverture permettant à un intervenant d'accéder depuis l'extérieur à l'intérieur dudit bâti (4), **caractérisé en ce que** la première ouverture (29) est disposée sur la face inférieure (26) de la branche inférieure (15) du bâti (4) en forme de U renversé à 90°, du côté de la partie verticale (4a) du bâti (4) en forme de U renversé à 90°.

2. Ensemble selon la revendication 1, **caractérisé en ce que** la face inférieure (26) de la branche inférieure (15) comprend une seconde ouverture, (30).

3. Ensemble selon l'une des revendications 1 ou 2, **caractérisé en ce qu'**il comporte de plus des moyens de manutention et de déplacement de tout ou partie des premiers et seconds moyens d'entraînement, respectivement.

4. Ensemble selon la revendication 3, **caractérisé en ce que** les moyens de manutention et de déplacement comportent au moins un rail (35), un chariot (37) et un système de palans (38).

5. Ensemble selon l'une des revendications 1 à 4, **caractérisé en ce que** la face inférieure (41) de la branche supérieure (16) comporte un ouverture (40), permettant l'accès à l'espace délimité par les deux branches horizontales (15, 16) du bâti (4) en forme de U renversé à 90°.

6. Ensemble selon l'une des revendications 1 à 5, **caractérisé en ce que** le carter (11) comprend une trappe d'accès (42) latérale.

7. Ensemble selon l'une des revendications 1 à 6, **caractérisé en ce que** l'extrémité distale de la branche supérieure (16) du bâti (4) en forme de U renversé à 90° est prolongée selon un plan vertical, par une jupe (10A) obturant partiellement l'espace délimité par les deux branches horizontales (15, 16) dudit bâti (4) en forme de U renversé à 90°.

## Claims

1. Device for discharging solid matter in pulverulent or grain form stored over an area or in a silo (1), of the type comprising two colinear endless screws (6, 7) disposed along a diameter of the area or of the silo and intended to evacuate the matter towards a central evacuation orifice (13) provided on the area or at the bottom of the silo (1) and at the bottom of which is fixed a frame (4) in the form of a U overturned through 90°, and between the lower (15) and upper (16) horizontal arms of which is disposed a casing (11) on which is fixed the end of each screw (6, 7), the casing (11)/screw (6, 7) assembly being capable of being driven in rotation about the central vertical axis (X) of the area or of the silo (1) by first drive means, the screws (6, 7) being, moreover, driven in rotation about their own axis (12) by second drive means, said frame (4) being hollow and comprising at least a first opening allowing an operator to access said frame (4) from the outside to the inside, **characterized in that** the first opening (29) is disposed on the lower face (26) of the lower arm (15) of the frame (4) in the shape of a U overturned through 90°, on the side of the vertical part (4a) of the frame (4) in the shape of a U overturned through 90°.

2. Device according to Claim 1, **characterized in that** the lower face (26) of the lower arm (15) comprises a second opening (30).

3. Device according to one of Claims 1 or 2, **characterized in that** it further comprises means for handling and displacing all or part of the first and second drive means, respectively.

4. Device according to Claim 3, **characterized in that** the handling and displacement means comprise at least one rail (35), a carriage (37) and a block and tackle system (38).

5. Device according to one of Claims 1 to 4, **characterized in that** the lower face (41) of the upper arm (16) comprises an opening (40) allowing access to the space defined by the two horizontal arms (15, 16) of the frame (4) in the shape of a U overturned through 90°.

6. Device according to one of Claims 1 to 5, **characterized in that** the casing (11) comprises a lateral trapdoor (42) for access.

7. Device according to one of Claims 1 to 6, **characterized in that** the distal end of the upper arm (16) of the frame (4) in the shape of a U overturned through 90° is extended in a vertical plane by a skirt (10A) partially obturating the space defined by the two horizontal arms (15, 16) of said frame (4) in the shape of a U overturned through 90°.

## Patentansprüche

1. Förderanlage für feste feinpulvrige oder körnige Stoffe, die auf einer Tenne oder in einem Silo (1) des Typs gelagert werden, der zwei kollineare Endlosschnecken (6, 7) aufweist, die entlang des Durchmessers der Tenne oder des Silos angeordnet und zum Austrag des Stoffs über eine zentrale Entleerungsöffnung (13), die in der Tenne oder im Boden des Silos (1) vorgesehen ist, bestimmt sind, in dessen Hintergrund ein Tragelement (4) in Form eines um 90° gedrehten U befestigt ist, zwischen dessen horizontalem unterem (15) und horizontalem oberem (16) Schenkel ein Kasten (11) angeordnet ist, auf dem jeweils das Ende der Schnecken (6, 7) befestigt ist, wobei die Gesamtheit Kasten (11)/Schnecke(6, 7) dazu ausgelegt ist, durch erste Antriebseinrichtungen um die vertikale zentrale Achse (X) der Tenne oder des Silos (1) in Rotation versetzt zu werden, wobei die Schnecken (6, 7) zudem durch zweite Antriebseinrichtungen um ihre eigene Achse (12) in Rotation versetzt werden, wobei das Tragelement (4) hohl ist und mindestens eine erste Öffnung aufweist, die einer eingreifenden Person den Zugang vom Äußeren zum Inneren des Tragelements (4) ermöglicht, **dadurch gekennzeichnet, daß** die erste Öffnung (29) auf der unteren Fläche (26) des unteren Schenkels (15) des Tragelements (4) in Form eines um 90° gedrehten U auf der Seite des vertikalen Teils (4a) des Tragelements (4) in Form eines um 90° gedrehten U angebracht ist.

2. Anlage nach Anspruch 1, **dadurch gekennzeichnet, daß** die untere Fläche (26) des unteren Schenkels (15) eine zweite Öffnung (30) aufweist.

3. Anlage nach einem der Ansprüche 1 oder 2, **dadurch gekennzeichnet, daß** sie ferner Mittel zur Handhabung- und Verschiebung der ersten bzw. zweiten Antriebseinrichtungen insgesamt oder teilweise autweist.

4. Anlage nach Anspruch 3, **dadurch gekennzeichnet, daß** die Handhabungs- und Verschiebungseinrichtungen mindestens eine Schiene (35), einen Schlitten (37) und ein System von Flaschenzügen (38) aufweist.

5. Anlage nach einem der Ansprüche 1 bis 4, **dadurch gekennzeichnet, daß** die untere Fläche (41) des oberen Schenkels (16) eine Öffnung (40) aufweist, die den Zugang zu dem abgegrenzten Raum über die beiden horizontalen Schenkel (15, 16) des Tragelements (4) in Form eines um 90° gedrehten U ermöglicht.

6. Anlage nach einem der Ansprüche 1 bis 5, **dadurch gekennzeichnet, daß** der Kasten (11) eine seitliche Zugriffsluke (42) aufweist.

7. Anlage nach einem der Ansprüche 1 bis 6, **dadurch gekennzeichnet, daß** das distale Ende des oberen Schenkels (16) des Tragelements (4) in Form eines um 90° gedrehten U in einer vertikalen Ebene durch eine Verkleidung (10A) verlängert ist, die den durch die beiden horizontalen Schenkel (15, 16) des Tragelements (4) in Form eines um 90° gedrehten U abgegrenzten Raum teilweise verschließt.
